**Europäisches Patentamt**

(19) **European Patent Office**

**Office européen des brevets**

(11) Veröffentlichungsnummer: **0 031 806**
**B1**

(12) # EUROPÄISCHE PATENTSCHRIFT

(45) Veröffentlichungstag der Patentschrift:
**14.12.83**

(21) Anmeldenummer: **80890144.1**

(22) Anmeldetag: **03.12.80**

(51) Int. Cl.³: **G 01 M 13/00,** G 01 H 3/00

(54) Einrichtung zur Funktionsprüfung von Ventilen von Brennkraftmaschinen.

(30) Priorität: **19.12.79 AT 8022/79**

(43) Veröffentlichungstag der Anmeldung:
**08.07.81 Patentblatt 81/27**

(45) Bekanntmachung des Hinweises auf die Patenterteilung:
**14.12.83 Patentblatt 83/50**

(84) Benannte Vertragsstaaten:
**CH DE FR GB IT LI**

(56) Entgegenhaltungen:
**DE - A - 1 798 147**
**DE - A - 2 916 490**
**FR - A - 1 480 268**
**FR - A - 2 277 249**
**US - A - 4 040 294**

**INSTRUMENTS & CONTROL SYSTEMS, Band 47, Nr. 9,**
**September 1974, Seiten 81-83 Radnor, PA, U.S.A., K.**
**ARTHUR et al.: "How does your engine run? Waveform**
**analysis predicts possible problems?**
**DESIGN ENGINEERING, Dezember 1977, Seiten 41, 42**
**London, G.B., S.E. COCKRAM: "Valve noise-obtaining**
**the data for a redesign"**

(73) Patentinhaber: **List, Hans, Heinrichstrasse 126,**
**A-8010 Graz (AT)**

(72) Erfinder: **Dipl.-Ing. Gerhard WÖSS, Hans-Riehl**
**Gasse 12A, A-8043 Graz (AT)**
Erfinder: **Schreiber, Erich, Amschelgasse 37,**
**A-8010 Graz (AT)**

(74) Vertreter: **Krause, Walter, Dr. Dipl.-Ing.,**
**Margaretenstrasse 21, A-1040 Wien (AT)**

Einrichtung zur Funktionsprüfung von Ventilen von Brennkraftmaschinen

Die Erfindung betrifft eine Einrichtung zur Funktionsprüfung von die Einlass- bzw. Auslassöffnung von Brennkraftmaschinen gegen den Zylinderraum abschliessenden Ventilen, bei der zur Aufnahme der Ventilgeräusche in einer Auslassleitung zumindest ein Mikrophon vorgesehen ist und die Signale des Mikrophons einem Verstärker, einer Vergleichseinrichtung und einer Auswerteinheit zugeführt sind.

Es sind Einrichtungen der genannten Art bekannt, welche zur Prüfung der Dichtheit der Ventile die Kompressionsdrücke der einzelnen Zylinder der Kolbenmaschine messen und miteinander vergleichen. Die Druckmessung erfolgt dabei entweder direkt mittels eingesetzter Druckgeber oder indirekt über die Messung der Schwankungen in der Stromaufnahme des elektrischen Startermotors. Diese Methode ist relativ einfach und rasch anwendbar, jedoch können nur grobe Fehler festgestellt werden. Zwar ist damit die Zuordnung des Fehlers zu einem bestimmten Zylinder nicht aber zu einem bestimmten Ventil möglich, bzw. kann nicht einmal gesagt werden, ob tatsächlich ein undichtes Ventil oder aber schadhafte Kolbenringe für einen eventuellen Druckabfall verantwortlich sind.

Weiters ist es bekannt, durch Erzeugung eines Unterdruckes im Saugrohr und Messung des zeitlichen Verlaufes des Druckanstieges die Dichtheit der Einlassventile und auf entsprechende Weise diejenige der Auslassventile zu prüfen. Diese Methode ist genauer als die erstgenannte, jedoch auch komplizierter in der Anwendung. Sie liefert aber ebenfalls keine eindeutige Aussage darüber, ob tatsächlich ein Ventil undicht ist, da ein gemessener unzulässig rascher Druckanstieg auch von einem Leck im Saugrohr, einer schlechtsitzenden Dichtung, oder ähnlichem verursacht werden kann.

Es ist ferner bekannt, den Verdichtungsraum der Kolbenmaschine, also z.B. den Brennraum eines Motors, mit Druckluft zu beaufschlagen und aus dem gemessenen Druckabfall auf eventuell vorhandene Undichtheiten zu schliessen. Diese Methode entspricht im wesentlichen der erstgenannten, ist kompliziert in der Anwendung und liefert ebenfalls keine eindeutige Aussage über die Quelle eines ggf. festgestellten Schadens. Im Falle eines festgestellten, zu starken Druckabfalles muss wiederum auf andere Weise untersucht werden, ob das Auspuffventil, das Einlassventil oder die Kolbenringe beim jeweiligen Zylinder undicht sind. Weiters ist mit dieser Methode ebensowenig wie mit den beiden vorgenannten eine Aussage über die eigentliche Funktion der Ventile, also z.B. über die tatsächlichen Ventilsteuerzeiten, zu erhalten.

In der nichtvorveröffentlichten DE-A-2 916 490 (Priorität 17. 3. 79) ist eine Vorrichtung zum Überwachen des Betriebsverhaltens der Ventile eines Kolbenkompressors beschrieben, bei der am oder im Zylinderkopf jedes Zylinders des Kolbenkompressors mindestens ein Schwingungsaufnehmer und im Bereich des Kurbeltriebes des Kolbenkompressors ein die jeweilige Winkellage der Kurbelwelle erfassender Phasengeber angeordnet sind, wobei Mittel vorgesehen sind, die auf die von dem Schwingungsaufnehmer und dem Phasengeber abgegebenen Signale entsprechen. Diese Mittel sind ein Detektor für die Pulsdauer sowie ein Logikglied, wobei das vom Schwingungsaufnehmer abgegebene Signal über den Detektor und das vom Phasengeber abgegebene Signal auf das Logikglied geschaltet sind, dessen Ausgang an ein Registriergerät angeschlossen ist. Gemäss dieser Druckschrift werden Schwingungsaufnehmer, z.B. piezoelektrische Elemente, eingesetzt, die nicht in den Ein- bzw. Auslassleitungen einer Brennkraftmaschine, sondern am bzw. im Gehäuse des Kolbenkompressors angeordnet werden. Ferner wird bei der Signalauswertung ein Zusammenhang zwischen der Art der Geräusche und der Phase der Kurbelwelle nur für die Pulsdauer ermittelt und die Intensität der Geräusche vernachlässigt. Die Feststellung der Grösse von Ventilstörungen ist nicht möglich.

Aus der US-A-4 040 294 ist es bekannt, ein Mikrophon in der Auslassleitung einer Brennkraftmaschine anzuordnen. Mit dieser Anordnung sollen Zündaussetzer festgestellt werden, wozu die Signale der Messsonde in einer Auswerteschaltung entsprechend verarbeitet werden.

Prinzipielle Messmethoden zur Feststellung von Zündfehlern bzw. zur Ventilüberwachung sind der DE-A-1 798 147, FR-A-2 277 249 und den Druckschriften INSTRUMENTS & CONTROL SYSTEMS, Band 47, Nr. 9, September 1974, Seiten 81–83, und DESIGN ENGINEERING, Dezember 1977, Seiten 41, 42, zu entnehmen.

Vorliegende Erfindung geht von einem Stand der Technik aus, wie er der FR-A-1 480 268 zu entnehmen ist, die eine Anordnung zeigt, die der eingangs beschriebenen Einrichtung entspricht. Es ist mit der Einrichtung gemäss dem genannten Dokument möglich, und zwar nur während ihres Betriebes, aufgrund der mit einem Mikrophon aufgenommenen Ventilgeräusche auf Ventilfehler zu schliessen. Eine Feststellung, welche Ventile Störungen aufweisen, ist mit dieser Anordnung allerdings nicht möglich.

Aufgabe der vorliegenden Erfindung ist es, eine Einrichtung der eingangs genannten Art anzugeben, mit deren Hilfe die Funktionsprüfung der Ventile auf einfache Art möglich ist und welche es insbesondere erlaubt, eine Abweichung von der ordnungsgemässen Funktion dem jeweiligen verursachenden Ventil eindeutig zuzuordnen.

Dies wird gemäss der Erfindung dadurch erreicht, dass die Brennkraftmaschine zum Zwecke der Funktionsprüfung mit einem Fremdantrieb verbunden ist, und dass auch in einer Einlassleitung der Brennkraftmaschine zumindest ein Mikrophon angeordnet ist, dass die von den Mikrophonen aufgenommenen Signale nach einer Aus-

2

filterung von Nebengeräuschen einer Tor-Schaltung zugeführt sind, welche in Abhängigkeit von der Winkelstellung der Kurbelwelle der Brennkraftmaschine gesteuert ist und an deren Ausgang als Vergleichseinrichtung ein Grenzwertschalter angeschlossen ist, dem in Abhängigkeit von einem vorbestimmten Winkelbereich der Kurbelwelle die Signale zuführbar sind und dessen Ausgang mit einer Zuordnungsschaltung als Auswerteinheit verbunden ist, die in Abhängigkeit von der Winkelstellung der Kurbelwelle gesteuert ist und die Ausgangssignale des Grenzwertschalters dem verursachenden Ventil zuordnet. Als Ventilgeräusche sind dabei sowohl die beim Aufsitzen des Ventiltellers auf dem Ventilsitz, bzw. beim Abheben davon, entstehenden metallischen Geräusche als auch die beim Aus- bzw. Einströmen von Luft oder Gas durch eine Undichtheit am Ventilsitz entstehenden Zischgeräusche zu verstehen. Diese Geräusche werden von den Mikrophonen in entsprechende elektrische Signale umgewandelt, und nach Verstärkung und Ausfilterung von sich in Frequenz und Lautstärke unterscheidende Nebengeräuschen einer Tor-Schaltung zugeführt. Über eine geeignete Anordnung zur Bestimmung der Winkelstellung der Kurbelwelle wird diese Tor-Schaltung so gesteuert, dass das von den Ventilgeräuschen stammende Signal nur während des für das jeweilige Ventil in Frage kommenden Winkelbereiches der Kurbelwelle an einen Grenzwertschalter weitergeleitet wird. Dieser ist z.B. für die Dichtheitsprüfung so eingestellt, dass er, sobald das eine Undichtheit anzeigende Zischen eine vorbestimmte Lautstärke und somit das Signal einen vorbestimmten Pegel überschreitet, ein Signal an die Zuordnungsschaltung abgibt. Diese ist ebenfalls abhängig von der Winkelstellung der Kurbelwelle gesteuert und erlaubt somit – auch wenn z.B. für vier Auslassventile nur ein einziges Mikrophon vorgesehen ist – die eindeutige Angabe, welches der Ventile das auslösende Signal verursacht hat.

Für die Prüfung der tatsächlichen Steuerzeiten der Ventile ist lediglich die Art der registrierten Geräusche durch die Änderung der Ausfilterung entsprechend zu ändern. Anstelle der Zischgeräusche für die Dichtheitsprüfung sind in diesem Falle die metallischen Sitzgeräusche massgeblich.

Bei Mehrzylindermaschinen kann es vorkommen, dass gleichzeitig mit z.B. der Kompressionsphase eines Zylinders andere Störgeräusche, wie z.B. die Auspuffventilöffnung eines anderen Zylinders, auftreten. Um auch in diesem Falle eine eindeutige Zuordnung zu ermöglichen, ist in Weiterbildung der Erfindung vorgesehen, dass für jedes zu prüfende Ventil ein eigenes Mikrophon in der zugehörigen Einlass- bzw. Auslassleitung angeordnet ist. Nach Abnahme der ggf. vorhandenen Sammelrohre wird also das bzw. werden die Mikrophone an den zugehörigen Leitungen angeordnet, worauf die Prüfung in der bereits beschriebenen Weise erfolgen kann.

Eine bevorzugte Ausführung bei der das Mikrophon in einem Adapter untergebracht ist, ist erfindungsgemäss dadurch gekennzeichnet, dass bei abmontiertem Auslassschalldämpfer, Luftfilter oder sonstigen Anschlussaggregaten, der Adapter an der jeweiligen Ein- bzw. Auslassleitung anbringbar bzw. an diese angepasst ist. Dieser Adapter ermöglicht es z.B., dass das Mikrophon von der Einlass- bzw. Auslassleitung körperschallmässig abgekoppelt ist, wodurch die Gewinnung eines eindeutig zuordenbaren Signales wesentlich erleichtert wird.

Die Auswertung der Mikrophonsignale kann dabei beispielsweise von einem Mikroprozessor durchgeführt werden, welcher die Tor-Schaltung steuert, die Signale der Grenzwertschalter verarbeitet und diese entsprechend der Kurbelwellenstellung den einzelnen Zylindern zuordnet. Dies stellt eine besonders günstige und verlässliche Anordnung der Schaltungselemente dar, wodurch der Umgang mit der erfindungsgemässen Anordnung wesentlich vereinfacht wird.

Die Erfindung wird im folgenden anhand der in der Zeichnung dargestellten Ausführungsbeispiele näher erläutert. Es zeigt:

Fig. 1 eine schematische Darstellung der erfindungsgemässen Anordnung an einer Vierzylinder-Brennkraftmaschine und

Fig. 2 ein Detail der Mikrophonanordnung.

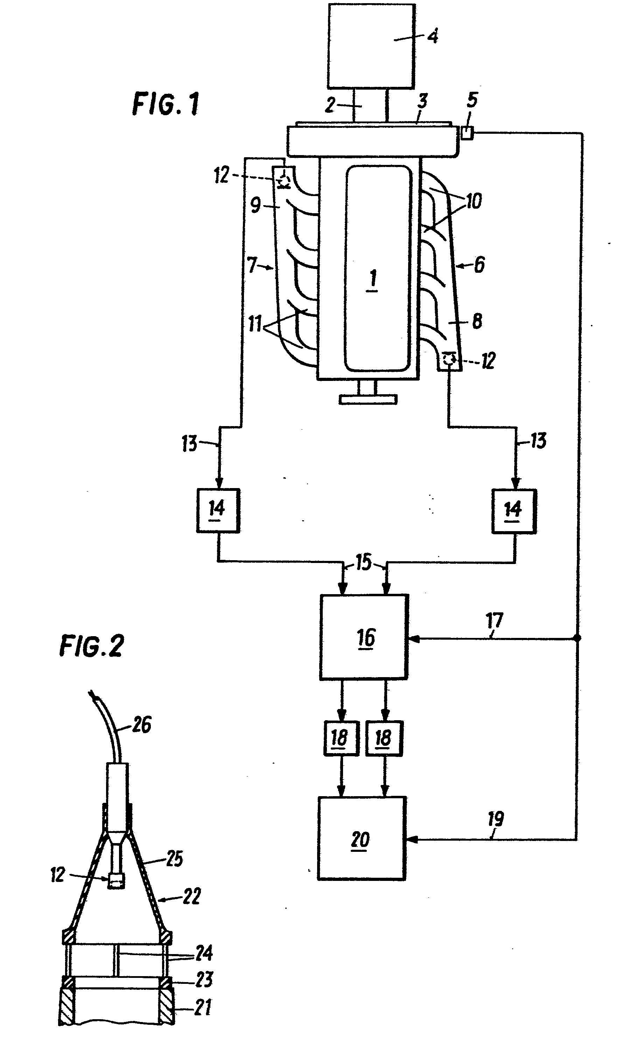

Die Vierzylinder-Brennkraftmaschine 1 in Fig. 1 weist an ihrer Abtriebswelle 2 eine Kupplungsscheibe 3 auf, welche für den Anschluss eines Fremdantriebes 4, und im gezeichneten Ausführungsbeispiel auch als Winkelmarkengeber für den Abnehmer 5 der Drehwinkelmessung an der Kurbelwelle, dient. Die Einlass- bzw. Auslassleitung 6 bzw. 7 besteht aus einem Sammelrohr 8 bzw. 9, welches mittels einzelner Krümmer 10 bzw. 11 mit den jeweiligen Kanälen am nicht näher dargestellten Zylinderkopf der Brennkraftmaschine verbunden ist. Sowohl in der Einlassleitung 6 als auch in der Auslassleitung 7 ist jeweils ein Mikrophon 12 angeordnet, wobei zu diesem Zwecke sowohl das Luftfilter als auch der Auslassschalldämpfer abgenommen wurden. Die Mikrophone 12 sind über Ableitungen 13 mit je einem kombinierten Verstärker und elektronischen Bandpassfilter 14 verbunden, welche ihrerseits die Signale über Leitungen 15 an einer Tor-Schaltung 16 leiten, die über die Zuleitung 17 mit den Winkelsignalen des Abnehmers 5 versorgt wird. Die Tor-Schaltung 16 ist mit Grenzwertschaltern 18 verbunden, welche bei Überschreitung eines bestimmten Signalpegels eine über die Zuleitung 19 ebenfalls mit den Winkelsignalen des Abnehmers 5 versorgte Zuordnungsschaltung 20 aktivieren.

Am Beispiel einer Ventildichtheitsprüfung sei die Funktion dieser erfindungsgemässen Anordnung näher erläutert.

Die Brennkraftmaschine 1 bzw. deren Kurbeltrieb wird über den Fremdantrieb 4 und die Abtriebswelle 2 angeschleppt. Während des Kompressionstaktes ist – einwandfreies Funktionieren der Ventile vorausgesetzt – sowohl das Einlassals auch das Auslassventil des jeweiligen Zylinders geschlossen, also der Kompressionsraum im Zylinder von der Einlass- und der Auslassleitung 6, 7 abgeschlossen. Kommt es nun, z.B. aufgrund eines wegen falscher Einstellung nicht ganz schliessenden Ventiles, eines korrodierten Ventiltellers, einer schlechten Ventilsitzbearbeitung oder ähnlichem, zum Auftreten einer Undichtheit am Ventilsitz, so macht sich diese durch Austreten des komprimierten Mediums aus dem Zylinder unter hoher Geschwindigkeit bemerkbar. Die Strömungsgeschwindigkeit des austretenden Leckmediums erreicht dabei bereits bei geringen Druckdifferenzen die Schallgrenze und führt damit zur Erzeugung eines Zischgeräusches hauptsächlich im höheren Frequenzbereich. Diese ggf. auftretenden Zischgeräusche werden von den Mikrophonen 12 aufgenommen und in ein elektrisches Signal umgesetzt, welches im Verstärker und elektronischen Bandpassfilter 14 so aufbereitet wird, dass sonstige von der Brennkraftmaschine herrührende störende Nebengeräusche möglichst ausgeschaltet werden.

Der auf der Kupplungsscheibe 3 angebrachte Winkelmarkengeber liefert in Zusammenarbeit mit dem Abnehmer 5 elektrische Signale über die Zuleitung 17 an die Tor-Schaltung 16, welche es erlauben, die jeweilige Drehwinkelstellung der Kurbelwelle eindeutig festzustellen. Damit können die über die Leitungen 15 an die Tor-Schaltung 16 gelieferten Signale einer bestimmten Drehwinkelstellung der Kurbelwelle zugeordnet werden, bzw. kann die Tor-Schaltung 16 über die Drehwinkelsignale so getaktet werden, dass nur während des aufgrund des Kurbelwinkeldiagrammes überhaupt in Frage kommenden Zeitraumes Mikrophonsignale an die Grenzwertschalter 18 weitergeleitet werden.

Die Grenzwertschalter 18 sind so eingestellt, dass bei Überschreitung eines gewissen Signalpegels ein Ausgangssignal an die Zuordnungsschaltung 20 abgegeben wird. Damit kann z.B. ein Zischgeräusch in einer vorbestimmten Lautstärke, also eine gewisse Undichtheit, bei der Messung toleriert werden, oder auch nur eine Fehlanzeige aufgrund eines mit niedrigerem Pegel vorliegenden Nebengeräusches verhindert werden.

Die Zuordnungsschaltung 20 wird über die Zuleitung 19 ebenfalls mit den Winkelsignalen vom Abnehmer 5 versorgt, wodurch bei Auftreten eines die Überschreitung des an den Grenzwertschaltern 18 eingestellten Pegels anzeigenden Signales dieses – und damit die angezeigte Undichtheit – dem jeweiligen verursachenden Ventil zugeordnet werden kann.

Sollte bei Mehrzylindermaschinen der Fall eintreten, dass gleichzeitig mit der Kompressionsphase eines Zylinders gerade andere Geräusche, wie z.B. die Auspuffventilöffnung anderer Zylinder, auftreten, ist es, um die eindeutige Zuordnungsmöglichkeit zu erhalten, auch möglich, die Sammelrohre der Auslass- und Einlassleitung abzunehmen und an jeden Krümmer, oder auch direkt an die Kanalmündungen am Zylinderkopf ein eigenes Mikrophon anzusetzen.

Um z.B. die tatsächlich auftretenden Ventilsteuerzeiten zu überprüfen, ist es lediglich notwendig, an der in Fig. 1 dargestellten Anordnung das Ansprechen der Schaltung von den Zischgeräuschen während der Kompressionsphase auf die Öffnungs- bzw. Schliessgeräusche der Ventile zu verlegen.

Gemäss Fig. 2 ist an einem Stutzen 21 der Einlass- bzw. Auslassleitung der nichtdargestellten Brennkraftmaschine, bei abmontierten sonstigen Anschlussteilen wie Schalldämpfer, Luftfilter usw., ein im wesentlichen glockenförmiger Adapter 22 angeordnet, welcher z.B. aus Gummi oder einem anderen geeigneten Material bestehen kann. Dieser weist einen am Stutzen 21 anliegenden Anschlussring 23 auf, welcher über Abstützungen 24 mit der Aufnahmeglocke 25 für das Mikrophon 12 verbunden ist. Das Mikrophon 12 ist über eine Leitung 26 mit der nichtdargestellten Auswerteschaltung verbunden.

Durch die Abstützungen 24 ist ein genügend grosser freier Anströmquerschnitt in Fortsetzung des Stutzens 21 vorhanden und das Mikrophon 12 ist durch den gesamten Adapter körperschallmässig vom Stutzen 21 isoliert, was die Gewinnung eines eindeutig zuordenbaren Mikrophonsignales sehr erleichtert.

**Patentansprüche**

1. Einrichtung zur Funktionsprüfung von die Einlass- bzw. Auslassöffnung von Brennkraftmaschinen (1) gegen den Zylinderraum abschliessenden Ventilen, bei der zur Aufnahme der Ventilgeräusche in einer Auslassleitung (7) zumindest ein Mikrophon (12) vorgesehen ist und die Signale des Mikrophons (12) einem Verstärker, einer Vergleichseinrichtung und einer Auswerteeinheit zugeführt sind, dadurch gekennzeichnet, dass die Brennkraftmaschine (1) zum Zwecke der Funktionsprüfung mit einem Fremdantrieb (4) verbunden ist, und dass auch in einer Einlassleitung (6) der Brennkraftmaschine (1) zumindest ein Mikrophon (12) angeordnet ist, dass die von den Mikrophonen (12) aufgenommenen Signale nach einer Ausfilterung von Nebengeräuschen einer Tor-Schaltung (16) zugeführt sind, welche in Abhängigkeit von der Winkelstellung der Kurbelwelle der Brennkraftmaschine (1) gesteuert ist und an deren Ausgang als Vergleichseinrichtung ein Grenzwertschalter (18) angeschlossen ist, dem in Abhängigkeit von einem vorbestimmten Winkelbereich der Kurbelwelle die Signale zuführbar sind und dessen Ausgang mit einer Zuordnungsschaltung (20) als Auswerteeinheit verbunden ist, die in Abhängigkeit von der Winkelstellung der Kurbelwelle gesteuert ist und die Ausgangssignale des Grenzwertschalters (18) dem verursachenden Ventil zuordnet.

2. Einrichtung nach Anspruch 1, dadurch gekennzeichnet, dass für jedes zu prüfende Ventil ein eigenes Mikrophon (12) in der zugehörigen Einlass- bzw. Auslassleitung (6, 7) angeordnet ist.

3. Einrichtung nach Anspruch 1 oder 2, bei der das Mikrophon in einem Adapter (22) untergebracht ist, dadurch gekennzeichnet, dass bei abmontiertem Auslassschalldämpfer, Luftfilter oder sonstigen Anschlussaggregaten, der Adapter (22) an der jeweiligen Ein- bzw. Auslassleitung (6, 7) anbringbar bzw. an diese angepasst ist.

## Claims

1. A device for the performance of operational tests of valves closing the inlet and outlet openings of internal combustion engines (1) against the cylinder chamber, with at least one microphone (12) in an outlet channel (7) for receiving the valve noise, the signals of said microphone (12) being fed into the amplifier, a comparator and an evaluation unit, characterized in that the internal combustion engine (1) is connected to a separate drive unit (4) for the performance of operational tests, an inlet channel (6) of the internal combustion engine (1) is also provided with at least one microphone (12), and the signals received by the microphones (12) are being fed to a gate circuit (16) after ambient noise has been filtered out, which gate circuit (16) is controlled by the angular position of the crankshaft of said internal combustion engine (1) – its output being provided with a limit value switch (18) serving as said comparator – which comparator may be fed with the signals depending on a predetermined angle range of the crankshaft – its output being connected with an assignment circuit (20) as said evaluation unit, which is controlled by the angular position of the crankshaft and assigns the output signals of said limit value switch (18) to the particular valve causing them.

2. A device as in claim 1, characterized in that each valve to be tested is provided with a separate microphone (12) in the respective inlet/outlet channel (6, 7).

3. A device as in claim 1 or 2, with the said microphone being housed in an adapter (22), characterized in that said adapter (22) may be fitted, or rather adapted to the respective inlet/outlet channel (6, 7), after the outlet silencer, air filter or other assemblies have been removed.

## Revendications

1. Installation pour la vérification de fonctionnement des ouvertures d'admission et d'échappement d'un moteur à combustion interne (1), par des soupapes fermant la chambre de cylindre, installation dans laquelle est prévu au moins un microphone (12) dans une conduite d'échappement (7), pour capter les bruits de soupape, les signaux du microphone (12) étant transmis à un amplificateur, une installation de comparaison et une unité d'exploitation, installation caractérisée en ce que le moteur (1) dans le but de vérifier le fonctionnement, est relié à un entraînement extérieur (4), et au moins un microphone est disposé également dans une conduite d'admission du moteur, les signaux captés par les microphones (12) étant amenés, après filtration des bruits parasites, à un montage de porte (16), lequel est commandé en dépendance de la position angulaire du vilebrequin du moteur, et à la sortie duquel est raccordé, comme dispositif comparateur, un contacteur à valeur de seuil (18) auquel, en dépendance des repères angulaires prédéterminés du vilebrequin, les signaux sont amenés, et dont la sortie est reliée à une unité d'affectation (20) comme unité d'exploitation, laquelle est commandée en dépendance de la position angulaire du vilebrequin, et qui affecte les signaux de sortie du contacteur (18) à la soupape qui est cause des bruits.

2. Installation suivant la revendication 1, caractérisée en ce que, pour chaque soupape à vérifier, est prévu un microphone propre disposé dans sa conduite d'admission (6) et sa conduite d'échappement (7).

3. Installation suivant l'une des revendications 1 ou 2, dans laquelle le microphone est monté dans un dispositif d'adaptation (22), caractérisée en ce que, après démontage du pot d'échappement, du filtre d'air et autres agrégats accessoires, le dispositif d'adaptation (22) est monté sur la conduite d'admission (6) et la conduite d'échappement (7) en question et est adapté à la forme de cette conduite.

0 031 806

FIG. 1

FIG. 2

7